# EUROPEAN PATENT APPLICATION

(11) **EP 2 824 595 A1**
(43) Date of publication of application: **14.01.2015**
(21) Application number: 14176879.6
(22) Date of filing: 14.07.2014
(51) Int. Cl.: G06F 17/30

(54) **Method for an electronic device to execute an operation corresponding to a common object attribute among a plurality of objects**

(30) Priority: 12.07.2013 KR 20130082099
(71) Applicant: Samsung Electronics Co., Ltd, Gyeonggi-do 443-742 (KR)
(72) Inventor: WON, Sung-Joon, 443-742 Gyeonggi-do (KR)
(74) Representative: Gover, Richard Paul

(57) **Abstract**

A method for an electronic device to execute an operation corresponding to a common object attribute among a plurality of objects having same or similar data for the common object attribute. The method includes determining whether at least one common object attribute exists among a plurality of objects, determining whether data for the at least one common object attribute is identical or similar among the plurality of objects if the at least one common object exists; and executing an operation corresponding to the at least one common object attribute if data for the at least one common object attribute is identical or similar among the plurality of objects.

## Description

### BACKGROUND OF THE INVENTION

### 1. Field of the Invention

The present invention relates generally to an electronic device and a controlling method thereof,. For example, to an electronic device that executes one or more operations associated with a common attribute among a plurality of objects.

### 2. Description of the Related Art

As a result of their recent rapid development, electronic devices may now display a plurality of objects, each of which may have a variety of attributes, as well as data associated with those attributes.

In general, the attributes of objects may be input directly by a user or may be input in advance. Often, the data associated with the attributes of the objects are not appropriately input, or are not input at all.

When data associated with attributes are inappropriately input, or not input at all, users of electronic devices may not be able to search for and/or otherwise use the data associated with the attributes of the objects. Therefore, there is a need for a method for an electronic device to, inter alia, automatically input data associated with attributes of objects displayed and/or stored on the electronic device.

The present invention addresses at least the above problems and provides at least the advantages described below. Accordingly, one aspect of the present invention is to provide a method for an electronic device to execute an operation corresponding to at least one common object attribute among a plurality of objects.

According to an embodiment of the present invention, a method for an electronic device includes determining whether at least one common object attribute exists among a plurality of objects; determining whether data for the at least one common object attribute is identical or similar among the plurality of objects if the at least one common object exists; and executing an operation corresponding to the at least one common object attribute if the data for the at least one common object attribute is identical or similar among the plurality of objects.

According to another embodiment of the present invention, an electronic device includes a controller configured to determine whether at least one common object attribute exists among a plurality of objects, to determine whether data for the at least one common object attribute is identical or similar among the plurality of objects if the at least one common object exists, and to execute an operation corresponding to the at least one common object attribute if data for the at least one common object attribute is identical or similar among the plurality of objects; and a storage module configured to store the plurality of objects.

According to yet another embodiment of the present invention, a method for an electronic device includes loading a first image to be displayed on a screen of the electronic device; determining whether the loaded first image and a second image among a plurality of images have same or similar data for a common attribute; and automatically performing a predetermined operation on at least one of the loaded first image and at least one second image when it is determined that the first and at least one second images have same or similar data for a common attribute, the predetermined operation being based on the common attribute.

According to yet another embodiment of the present invention, a method for an electronic device includes loading a first object to be displayed on a screen of the electronic device; determining whether the loaded first object and at least one second object among a plurality of objects have same or similar data for a common attribute; and when it is determined that the first and at least one second objects have same or similar data for a common attribute: determining, based on the common attribute, a plurality of operations which may be performed on at least one of the loaded first object and at least one second object; providing the plurality of operations to a user as options on the screen of the electronic device; and executing an operation selected by the user from the plurality of operations.

According to still another embodiment of the present invention, a method for an electronic device includes loading a first object to be displayed by an application on a screen of the electronic device; automatically determining a similarity criterion corresponding to the application; automatically searching, using the similarity criterion, for at least one second object similar to the loaded first object from among a plurality of objects; and when at least one second object similar to the loaded first object is found among the plurality of objects using the similarity criterion, automatically performing an operation on at least one of the loaded first image and at least one second image, the operation to be automatically performed depending on at least one of the application, the similarity criterion, a common attribute of the loaded first object and the at least one second object, an object type of the loaded first object, and an object type of the at least one second object.

### BRIEF DESCRIPTION OF THE DRAWINGS

The above and other aspects, features, and advantages of the present invention will become more apparent from the following detailed description taken in conjunction with the accompanying drawings, in which:
FIG. 1 is a schematic block diagram illustrating an electronic device according to an embodiment of the present invention;
FIG. 2 is a flowchart illustrating a method for an electronic device to execute an operation corresponding to a common object attribute among a plurality of objects, according to an embodiment of the present invention;
FIG. 3 is a flowchart illustrating a method for an electronic device to execute an operation corresponding to a common object attributeamong a plurality of objects according to another embodiment of the present invention;
FIGS. 4A through 4D are flowcharts illustrating a method for an electronic device according to embodiments of the present invention;
FIGS. 5A through 5D are diagrams illustrating a screen displayed on an electronic device according to embodiments of the present invention; and
FIGS. 6 through 8 are flowcharts illustrating methods for an electronic device according to embodiments of the present invention.

### DETAILED DESCRIPTION OF

### EMBODIMENTS OF THE PRESENT INVENTION

Embodiments of the present invention will now be described more fully with reference to the accompanying drawings. However, the embodiments do not limit the present invention to a specific implementation, but should be construed as including all modifications, equivalents, and replacements included within the scope of the present invention, as defined in the appended claims and their equivalents.

While terms including ordinal numbers, such as "first" and "second," etc., may be used to describe various components, such components are not limited by these terms, which are used merely for the purpose to distinguish an element or components from the other elements or components. For example, a first element could be termed a second element, and similarly, a second element could be also termed a first element without departing from the scope of the present invention. As used herein, the term "and/or" includes any and all combinations of one or more of the associated listed items.

The terms used in this application are for the purpose of describing particular embodiments only and are not intended to limit the invention. As used herein, the singular forms are intended to include the plural forms as well, unless the context clearly indicates otherwise. The terms such as "include" and/or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

Unless defined otherwise, all terms used herein have the same meaning as commonly understood by those of skill in the art. Such terms as those defined in a generally used dictionary are to be interpreted to have meanings consistent with their meanings in the context of the relevant field, and are not to be interpreted in an idealized or overly formal sense unless expressly so defined herein.

An apparatus according to an embodiment of the present invention comprises an electronic device such as a personal computer, a terminal apparatus, or a smart TV, but the present invention is not limited thereto.

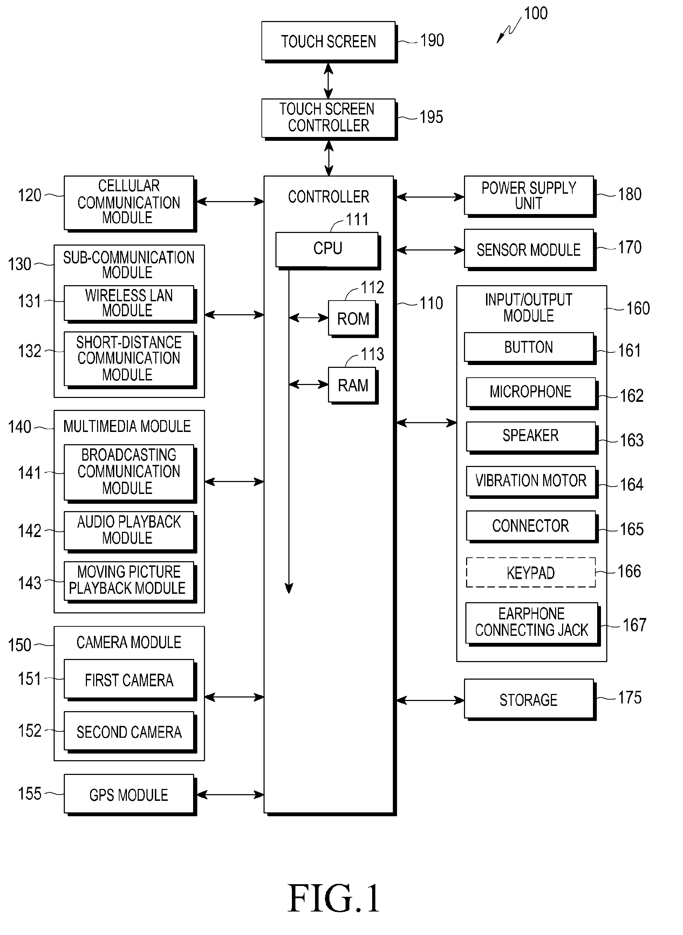

FIG. 1 is a schematic block diagram illustrating an electronic device according to an embodiment of the present invention.

Referring to FIG. 1, a device 100 may connect to an external device through an external device connecting part such as a sub-communication module 130, a connector 165, and an earphones connecting jack 167. The "external device" may have a wired and detachable connection with the device 100, such as earphones, an external speaker, a Universal Serial Bus (USB) memory, a charging device, a cradle, a docking station, a DMB antenna, a mobile payment device, a health care device (glucometer and the like), a game console, a navigation device for a vehicle, and the like. The "external device" may also have a wireless connection with device 100, such as a Bluetooth communication device, a short-distance communication device such as a Near Field Communication (NFC) device, a WiFi Direct communication device, and a radio Access Point (AP). The external device may be a portable terminal, a smart phone, a tablet PC, a desktop PC, and/or a server.

Referring to FIG. 1, the device 100 includes a touch screen 190, a touch screen controller 195, a controller 110, a cellular or mobile communication module 120, the sub-communication module 130, a multimedia module 140, a camera module 150, a GPS module 155, an input/output module 160, a sensor module 170, a storage module 175, and a power supply module 180. The sub-communication module 130 includes at least one of a wireless LAN module 131 and a short-distance communication module 132, and the multimedia module 140 includes at least one of a broadcasting communication module 141, an audio playback module 142, and a moving picture playback module 143. The camera module 150 includes at least one of a first camera 151 and a second camera 152, and the input/output module 160 includes at least one of a button 161, a microphone 162, a speaker 163, a vibration motor 164, the connector 165, a key pad 166, and the earphones connecting jack 167. Although this embodiment has touch screen 190 and touch screen controller 195, other embodiments of the present invention may use other types of display modules and display controllers.

The controller 110 may include a CPU 111, a ROM 112 that stores a control program for controlling the device 100, and a RAM 113 that stores a signal or data input from the outside of the device 100 or from operations performed inside the device 100. The CPU 111 may be a single-core, a dual-core, a triple-core, or a quad-core processor. The CPU 111, the ROM 112, and the RAM 113 are connected through an internal bus.

The controller 110 may control the mobile communication module 120, the sub-communication module 130, the multimedia module 140, the camera module 150, the GPS module 155, the input/output module 160, the sensor module 170, the storage module 175, the power supply module 180, the touch screen 190, and the touch screen controller 195.

The mobile communication module 120 provides the device 100 with an external connection through mobile communication, using at least one antenna or a plurality of antennas under the control of the controller 110. The mobile communication module 120 transmits and receives wireless signals for, e.g., a voice call, a video call, a short message service (SMS), or a multimedia message service (MMS), with a portable phone, a smart phone, a tablet PC, or other devices, for which a corresponding phone number may have been input into the device 100.

The sub-communication module 130 includes at least one of the wireless LAN module 131 and the short-distance communication module 132. Thus, the sub-communication module 130 may include only the wireless LAN module 131, only the short-distance communication module 132, or both the wireless LAN module 131 and the short-distance communication module 132.

The wireless LAN module 131 may be connected to the Internet at a place where a wireless access point (AP) is installed, under control of the controller 110. The wireless LAN module 131 supports one or more of the Institute of Electrical and Electronic Engineers (IEEE) wireless LAN standards under IEEE 802.11. The short-distance communication module 132 may provide wireless short-distance communication between the device 100 and an image forming device under the control of the controller 110. The wireless short-distance communication standard may be any of Bluetooth, Infrared Data Association (IrDA), WiFi-Direct communication, a Near Field Communication (NFC), and the like.

The device 100 may include at least one of the mobile communication module 120, the wireless LAN module 131, and the short-distance communication module 132, depending on the specific implementation and/or configuration of the electronic device. Also, depending on the specific implementation and/or configuration of the electronic device, the device 100 may include a combination of the mobile communication module 120, the wireless LAN module 131, and the short-distance communication module 132.

The multimedia module 140 may include the broadcasting communication module 141, the audio playback module 142, or the moving picture playback module 143. The broadcasting communication module 141 receives a broadcasting signal (for example, a TV broadcasting signal, a radio broadcasting signal, or a data broadcasting signal) and may receive broadcasting subsidiary information (for example, an Electric Program Guide (EPS) or an Electric Service Guide (ESG)) transmitted from a broadcasting station, through a broadcasting communication antenna, under the control of the controller 110. The audio playback module 142 plays back a stored or received digital audio file (the file extension of which may be mp3, wma, ogg, or wav) under the control of the controller 110. The moving picture playback module 143 plays back a stored or received digital moving picture file (the file extension of which may be mpeg, mpg, mp4, avi, mov, or mkv) under the control of the controller 110. The moving picture playback module 143 may also play back a digital audio file.

The multimedia module 140 may include the audio playback module 142 and the moving picture playback module 143, but exclude the broadcasting communication module 141. Also, the audio playback module 142 or the moving picture playback module 143 maybe included in the controller 110.

The camera module 150 may include at least one of the first camera 151 and the second camera 152, either of which may capture a still image and/or a moving picture under the control of the controller 110. The first camera 151 or the second camera 152 may include an auxiliary light source (for example, a flash) that provides an amount of light required for capturing a subject. The first camera 151 may be disposed on a front side of the device 100, and the second camera 152 may be disposed on a back side of the device 100. The first and second cameras 151 and 152 may be disposed on the same side of the device 100. In an embodiment where the first camera 151 and the second camera 152 are disposed close to each other, e.g., where the distance between them is greater than 1 cm and less than 8 cm, a three-dimensional (3D) still image or a 3D moving picture may be captured.

The GPS module 155 may receive signals from a plurality of GPS satellites in the Earth's orbit, and calculates the location of the device 100 based on, e.g., the Time of Arrival (TOA) of the signals from the GPS satellites.

The input/output module 160 may include at least one button 161, the microphone 162, the speaker 163, the vibration motor 164, the connector 165, and the keypad 166.

The at least one button 161 may be formed on a front side, a lateral side, or a back side of a housing of the device 100, and may comprise at least one of a power button, a lock button, a volume button, a menu button, a home button, a back button, and a search button.

The microphone 162 may receive sound input, such as a voice, and generates an electric signal, under the control of the controller 110.

The speaker 163 outputs a sound corresponding to a variety of signals (for example, a wireless signal, a broadcasting signal, a digital audio file, a digital moving picture file, an image capturing signal, and the like) from any of the mobile communication module 120, the sub-communication module 130, the multimedia module 140, or the camera module 150. The speaker 163 may output a sound corresponding to a function performed by the device 100 (for example, a button manipulation sound corresponding to a phone call or a ring-back tone). The speaker 163 or a plurality of speakers including speaker 163 may be formed in an appropriate location or locations on the housing of the device 100.

The vibration motor 164 may convert an electric signal into a mechanical vibration under the control of the controller 110. The vibration motor 164 may operate, for example, when the device 100 is in a vibration mode and receives a voice call from another device. Vibration motor 164 or a plurality of vibration motors including vibration motor 164 may be formed in the housing of the device 100. The vibration motor 164 may also operate in response to a user who touches the touch screen 190 or who makes one or more successive gestures by touching the touch screen 190.

The connector 165 may connect the device 100 and an external device or a power source. Under the control of the controller 110, data stored in the storage module 175 of the device 100 may be transmitted to an external device or data may be received from an external device through a wired cable connected to the connector 165. The external device may be, e.g., a docking station, and the data may be an input signal transferred from an external device, for example, a mouse, a keyboard, and the like. Also, the external device may be a power source which, through a wired cable connected to the connector 165, provides power to, and/or charges a battery of, device 100.

The keypad 166 receives key input from the user of the device 100. The keypad 166 may be a physical keypad formed on the device 100 or a virtual keypad displayed on the touch screen 190. Whether a physical and/or virtual keypad is used depends on the implementation and/or configuration of the device 100.

A plug for earphones may be inserted into the earphone connecting jack 167 for connection with the device 100.

The sensor module 170 includes at least one sensor that detects a state and/or condition of the environment of the device 100. For example, the sensor module 170 may include a proximity sensor to detect the proximity of the user to the device 100, an illuminance sensor to detect the amount of light around the device 100, and a gyro sensor to detect the motion of the device 100 (for example, the rotation of the device 100, the acceleration or vibration applied to the device 100), to detect the compass direction using the geomagnetic field, and to detect the direction of gravity. The sensor module 170 may also include an altimeter to detect the altitude by measuring the atmospheric pressure The at least one sensor detects the state and/or condition of the environment of the device 100, and generates a signal corresponding to the detection and transmits the generated signal to the controller 110. Which sensors are in the sensor module 170 depend on the implementation of the device 100.

The storage module 175 may store a signal or data input/output to or from an operation of the mobile communication module 120, the sub-communication module 130, the multimedia module 140, the camera module 150, the GPS module 155, the input/output module 160, the sensor module 170, the touch screen 190, under the control of the controller 110. The storage module 175 may store a control program and an application for controlling the device 100 or the controller 110.

The term "storage module" as used herein includes the storage module 175, the ROM 112 and the RAM 113 included in the controller 110, or a memory card (for example, an SD card or a memory stick) contained in and/or connected to the device 100. The storage module may include a non-volatile memory, a volatile memory, a Hard Disk Drive (HDD), or a Solid State Drive (SSD).

The power supply module 180 supplies power to one battery or a plurality of batteries disposed in the housing of the device 100, under the control of the controller 110. One or more batteries supply power to the device 100. The power supply module 180 may also supply the device 100 with power input from an external power source through a wired cable connected to the connector 165. The power supply module 180 may also supply the device 100 with power wirelessly input from an external power source through a wireless charging technology. The touch screen 190 may provide a user with user interfaces corresponding to various services (for example, calling, data transmission, broadcasting, and image capturing). The touch screen 190 may transmit, to the touch screen controller 195, an analog signal corresponding to touch input on a displayed user interface. The touch screen 190 may receive input through a body part of the user (for example, a finger) or through a touch input module (for example, a stylus pen). The touch screen 190 may also receive the input of one or more successive gestures. The touch screen 190 may transmit, to the touch screen controller 195, an analog signal corresponding to any input gestures.

Embodiments of the present invention are not limited to direct contact between the touch screen 190 and a body part of the user or a touch input module, and may include non-contact. The distance from the touch screen 190 at which non-contact would be detected as input depends on the implementation and/or a configuration of the device 100.

The touch screen 190 may be implemented as any one of the various types of touch screens, including, for example, resistive, capacitive, infrared, and/or acoustic wave.

The touch screen controller 195 converts an analog signal received from the touch screen 190 into a digital signal (for example, X and Y coordinates), and transmits the digital signal to the controller 110. The controller 110 may control what is displayed on the touch screen 190 using the digital signal received from the controller 195. For example, the controller 110 may, in response to a touch input of a shortcut icon displayed on touch screen 190, perform a selection of the shortcut icon or execute an application and/or action corresponding to the shortcut icon. The touch screen controller 195 may be implemented in the controller 110.

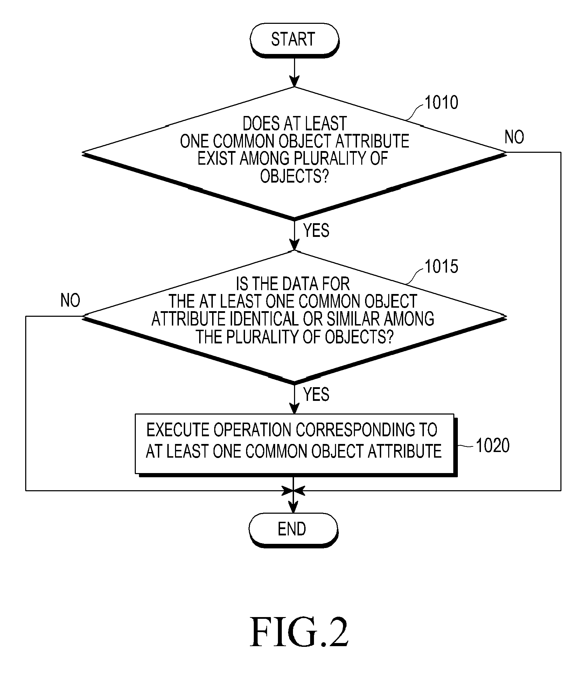

FIG. 2 is a flowchart illustrating a method for an electronic device to execute an operation corresponding to a common object attribute among a plurality of objects, according to an embodiment of the present invention.

Referring to FIG. 2, the method may determine whether at least one common object attribute exists among a plurality of objects in step 1010. The controller 110 of the electronic device 100 may determine whether the at least one common object attribute exists among the plurality of objects. Next, the method may determine whether data for the at least one common object attribute is identical or equal or similar among the plurality of objects if the at least one common object exists in step 1015. The controller 110 of the electronic device 100 may determine whether data for the at least one common object attribute is identical or similar among the plurality of objects.

In this example, the plurality of objects may comprise, for example, images, texts, media, and notes. The at least one common object attribute may includes at least one of an image, a person tag, a time stamp, a checked place, a title of a note, a body text of a note, an attached media, and a location tag. The object attribute may be included in metadata of an object. The object attribute may be obtained based on a person recognition result to be described in detail, as opposed to based on the metadata.

For example, the controller 110 determines whether a common object attribute, such as a similar property(such as, for example, an object or person recognized within the image), exists among the plurality of objects, such as images. That is, the controller 110 determines whether a similar property exists among images. For example, the controller 110 determines whether a first image and a second image, corresponding to the plurality of images, are similar to each other. In this example, the images are stored in the storage module 175, in advance. Therefore, the controller 110 calls the images stored in the storage module 175, and determines whether the first image and the second image are similar to each other. The plurality of images may be stored in a separate server. For example, the first image is stored in the storage module 175 of the electronic device 100, in advance, and the second image may be stored in a separate server. In this example, the controller 110 receives the second image from the separate server through communication with the separate server using a communication module. The controller 110 may execute an operation of determining whether a similar image property exists among images through an image engine. The image engine may execute an operation of measuring a similarity among the images, and may be included in the controller 110.

Subsequently, when data for the at least one common object attribute is identical or similar among the plurality of objects, the method executes an operation corresponding to the at least one common object attribute in step 1020. When data for the at least one common object attribute is identical or similar among the plurality of objects , the controller 110 executes the operation corresponding to the at least one common object attribute. In this example, the operation may be providing tag data, grouping, providing a title, producing an episode, or providing a file name. The operation corresponding to the at least one common object attribute may be determined in advance in association with the object attribute.

For example, when the controller 110 determines whether data for the common object attribute, such as a similar image property, is identical or similar among the plurality of objects, such as images, the controller 110 may execute an operation, such as providing tag data, which corresponds to the at least one common object attribute, such as the similar image property. In this example, the tag data may be location tag data, person tag data, or event tag data. For example, when the controller 110 determines that a similar image property is identical or similar among the images, the controller 110 may execute an operation of providing tag data, such as the location tag data.

For example, the first image may include the location tag data, such as 'Hannam-dong, Yongsan-gu, Seoul', and the second image may not include the location tag data. In this example, the controller 110 determines whether the first image and the second image are similar images property, first, and when the first image and the second image are similar images property, the controller 110 provides the second image with the location tag data, such as 'Hannam-dong, Yongsan-gu, Seoul' included in advance in the first image, and includes the location tag data in the second image. Therefore, the second image may automatically include the location tag data, such as 'Hannam-dong, Yongsan-gu, Seoul'.

That is, the second image is similar to the first image and thus, there is a high probability that a location where the second image is captured is similar to a location where the first image is captured. The second image does not include the location tag data and thus, the location tag data needs to be automatically provided to the second image. Accordingly, according to an embodiment of the present invention, location tag data may be automatically provided and included in an image.

Therefore, according to an embodiment of the present invention, in a case in which whether a common object attribute, such as a similar image property, exists among a plurality of objects, such as images, and whether data for the similar image property is identical or similar among the plurality of objects is determined, an operation, for example, providing tag data, such as, the location tag data, which corresponds to at least one common object attribute, such as the similar image property, may be executed. That is, according to an embodiment of the present invention, location tag data may be provided when a attribute of a similar image property exists among images.

Therefore, according to an embodiment of the present invention, when at least one common object attribute exists among a plurality objects, an operation corresponding to the at least one common object attribute may be executed.

A first embodiment of the present invention will be described with reference to FIG. 2.

Referring again to FIG. 2, the method may determine whether at least one common object attribute exists among a plurality of objects in step 1010. The controller 110 of the electronic device 100 may determine whether at least one common object attribute exists among a plurality of objects. Next, the method may determine whether data for the at least one common object attribute is identical or similar among the plurality of objects if the at least one common object exists in step 1015. The controller 110 of the electronic device 100 may determine whether data for the at least one common object attribute is identical or similar among the plurality of objects. In this case, according to the first embodiment of the present invention, the plurality of objects may correspond to images, and the at least one common object attribute may include a person tag and a time stamp.

For example, the controller 110 determines whether the common object attribute, such as the person tag and the time stamp, exists among the plurality of objects, such as images. That is, the controller 110 determines whether data for the person tags and data for the time stamps are similar among the images. For example, the controller 110 determines whether data for the person tags and data for time stamps are similar between a first image and a second image corresponding to the plurality of images. In this example, the images are stored in the storage module 175 in advance. Therefore, the controller 110 calls the images stored in the storage module 175, and determines whether data for the person tags and data for time stamps are similar between the first image and the second image. Also, the plurality of images may be stored in a separate server. For example, the first image is stored in the storage module 175 of the electronic device 100 in advance, and the second image may be stored in a separate server. In this example, the controller 110 may receive the second image from the separate server through communication with the separate server using a communication module.

For example, the first image may include data for a person tag of 'person A and person B' and data for a time stamp of '2013-03-30 09:00', and the second image may include data for a person tag of 'person A, person B, and person C' and data for a time stamp of '2013-03-30 09: 05'. In this example, the controller 110 may compare data for the person tag of 'person A and person B' and data for the time stamp of '2013-03-30 09:00' included in the first image with data for the person tag of 'person A, person B, and person C' and data for the time stamp of '2013-03-30 09: 05' included in the second image. Therefore, the controller 110 determines that 'person A and person B' is identical from among person tags included in the first image and the second image, and data for time stamps of '2013-03-30 09:00' and '2013-03-30 09:05' are similar with a difference of 5 minutes. Therefore, the controller 110 determines that data for the person tags and data for the time stamps are similar among the images.

Subsequently, when data for the at least one common object attribute is identical or similar among the plurality of images, an operation corresponding to the at least one common object attribute may be executed in step 1020. The controller 110 may execute the operation corresponding to the at least one common object attribute when data for the at least one common object attribute is identical or similar to each other. In this example, the operation may comprise at least one of providing tag data, grouping, providing a title, producing an episode, or providing a file name.

For example, when the controller 110 determines that a common object attribute, such as a person tag and a time stamp, exists among the plurality of objects, such as images, the controller 110 may execute an operation, such as providing tag data, corresponding to the at least one common object attribute, such as the person tag and the time stamp. In this example, the tag data may be location tag data. For example, the controller 110 may execute an operation of providing tag data, such as the location tag data, when the controller 110 determines that person tags and time stamps are similar among the images.

For example, the first image may include the location tag data such as 'Hannam-dong, Yongsan-gu, Seoul' and the second image may not include the location tag data. In this example, the controller 110 determines whether data for person tags and data for time stamps are similar between the first image and the second image, first, and when it is determined that data for the person tags and data for time stamps are similar between the first image and the second image, the controller 110 may provide the second image with the location tag data, such as 'Hannam-dong, Yongsan-gu, Seoul', included in the first image in advance, and includes the location tag data in the second image.

Therefore, the second image may automatically include the location tag data, such as 'Hannam-dong, Yongsan-gu, Seoul'.

That is, the second image has data for a person tag and data for a time stamp similar to the first image and thus, there is a high probability that a location where the second image is captured is similar to a location where the first image is captured. The second image does not include the location tag data and thus, the location tag data needs to be automatically provided to the second image. Accordingly, according to an embodiment of the present invention, location tag data may be automatically provided and included in an image.

Therefore, according to an embodiment of the present invention, in a case in which whether a common object attribute, such as a person tag and a time stamp, exists among a plurality of objects, such as images, and whether data for the person tag and data for the time stamp is identical or similar between the first image and the second images, is determined, an operation, for example, providing tag data, such as the location tag data, which corresponds to at least one common object attribute may be executed. That is, according to an embodiment of the present invention, location tag data may be provided when a attribute in which person tags and time stamps are similar among images exists.

A second embodiment of the present invention will be described with reference to FIG. 2.

Referring again to FIG. 2, the method of controlling the electronic device 100 that executes an operation corresponding to a common object attribute among a plurality of objects according to an embodiment of the present invention may determine whether at least one common object attribute exists among a plurality of objects in step 1010. The controller 110 of the electronic device 100 may determine whether at least one common object attribute exists among the plurality of objects. Next, the method may determine whether data for the at least one common object attribute is identical or similar among the plurality of objects if the at least one common obj ect exists in step 1015. The controller 110 of the electronic device 100 may determine whether data for the at least one common object attribute is identical or similar among the plurality of objects.

In this case, according to the first embodiment of the present invention, the plurality of objects may correspond to images, and the at least one common object attribute may include a checked place and a time stamp.

For example, the controller 110 determines whether the common object attribute, such as the checked place and the time stamp, exists among the plurality of objects, such as images. Next, the controller 110 determines whether data for the checked places and data for time stamps are similar among the images. For example, the controller 110 determines whether data for the checked places and data for time stamps are similar between a first image and a second image corresponding to the plurality of images. In this example, the images may be stored in the storage module 175, in advance. Therefore, the controller 110 calls the images stored in the storage module 175, and determines whether data for the checked places and data for time stamps are similar between the first image and the second image. Also, the plurality of images are stored in a separate server. For example, the first image is stored in the storage module 175 of the electronic device 100 in advance, and the second image may be stored in a separate server. In this example, the controller 110 may receive the second image from the separate server through communication with the separate server using a communication module.

For example, the first image may include data for a checked place of 'gallery A' and data for a time stamp of '2013-03-30 09:00', and the second image may include data for a checked place of 'gallery A' and data for a time stamp of '2013-03-30 09: 05'. In this example, the controller 110 may compare data for the checked place of 'gallery A' and data for the time stamp of '2013-03-30 09:00' included in the first image with data for the checked place of 'gallery A' and data for the time stamp of '2013-03-30 09: 05' included in the second image. Therefore, the controller 110 determines that 'gallery A' is identical, which is the data for checked place included in the first image and the second image, and data for time stamps of '2013-03-30 09:00' and '2013-03-30 09:05' are similar with a difference of 5 minutes. Therefore, the controller 110 determines that data for the checked places and data for the time stamps are similar among the images.

Subsequently, when the at least one common object attribute exists, and data for the at least one common object attribute is identical or similar among the plurality of images, an operation corresponding to the at least one common object attribute may be executed in step 1020. The controller 110 may execute the operation corresponding to the at least one common object attribute when the at least one common object attribute exists. In this example, the operation may comprises at least one of providing tag data, grouping, providing a title, producing an episode, or providing a file name.

For example, when the controller 110 determines whether a common object attribute, such as a checked place and a time stamp, exists among the plurality of objects, such as images, and whether data for the checked place and data for the time stamp is identical or similar among the plurality of objects, the controller 110 may execute an operation, such as providing tag data, corresponding to at least one common object attribute, such as the checked place and the time stamp. In this example, the tag data may be location tag data. For example, the controller 110 may execute an operation of providing tag data such as the location tag data when the controller 110 determines that checked places and time stamps are similar among the images.

For example, the first image may include the location tag data such as 'Hannam-dong, Yongsan-gu, Seoul' and the second image may not include the location tag data. In this example, the controller 110 determines whether data for checked places and data for time stamps are similar between the first image and the second image, first, and when it is determined that data for the checked places and data for time stamps are similar between the first image and the second image, the controller 110 may provide the second image with the location tag data, such as 'Hannam-dong, Yongsan-gu, Seoul', included in the first image in advance, and includes the location tag data in the second image. Therefore, the second image may automatically include the location tag data, such as 'Hannam-dong, Yongsan-gu, Seoul'.

That is, the second image has data for a checked place and data for a time stamp similar to the first image and thus, there is a high probability that a location where the second image is captured is similar to a location where the first image is captured. The second image does not include the location tag data and thus, the location tag data needs to be automatically provided to the second image. Accordingly, according to an embodiment of the present invention, location tag data may be automatically provided and included in an image.

Therefore, according to an embodiment of the present invention, in a case in which whether a common object attribute, such as a checked place and a time stamp, exists among a plurality of objects, such as images, and whether data for the checked place and data for the time stamp is identical or similar among the plurality of objects, is determined, an operation, for example, providing tag data, such as, the location tag data, corresponding to at least one common object attribute may be executed. That is, according to an embodiment of the present invention, location tag data may be provided when a attribute in which checked places and time stamps are similar among images exists.

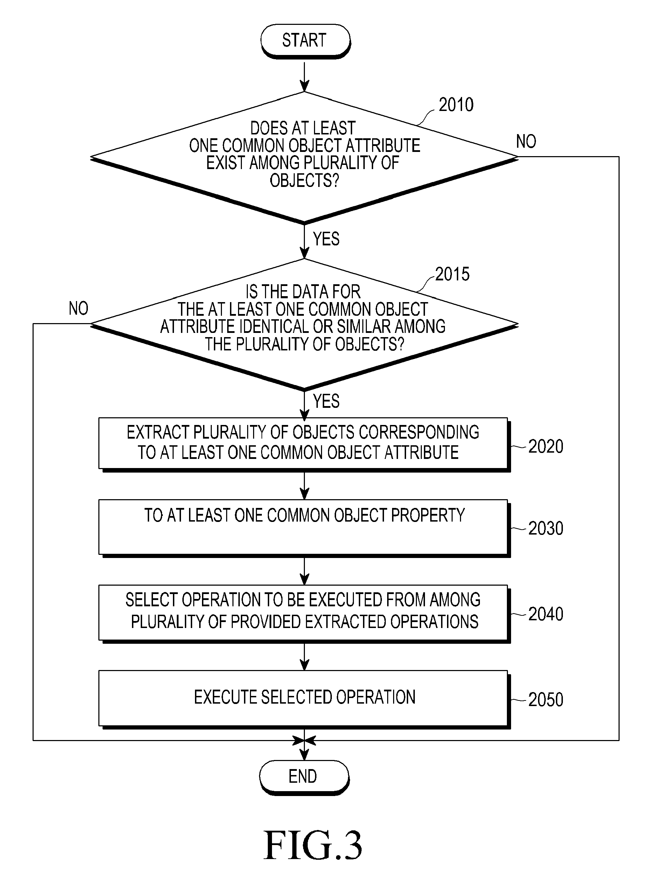

FIG. 3 is a flowchart illustrating a method of controlling an electronic device that executes an operation corresponding to a common object attribute among a plurality of objects according to another embodiment of the present invention.

A step of executing an operation corresponding to at least one common object attribute when the at least one common object attribute exists, and data for the at least one common object attribute is identical or similar among the plurality of objects may include extracting a plurality of operations corresponding to the at least one common object attribute, providing the plurality of extracted operations, and selecting an operation to be executed from among the plurality of provided extracted operations, and executing the selected operation.

That is, when a plurality of operations corresponding to the at least one common object attribute exists, the electronic device may display all of the plurality of operations and may execute a selected operation. For example, as described in the embodiment of FIG. 2, the electronic device may determine that time stamps are similar between a first image and a second image as a common object attribute. The electronic device may determine that a difference in capturing times between data for the first image and data for the second image is 5 minutes. Accordingly, a first operation of storing location tag data as described above in the first image or a second operation of storing person tag data of the second image in the first image may be determined to be the operation to be executed.

The electronic device may display the first operation of storing the location tag data of the second image in the first image and the second operation of storing the person tag data of the second image in the first image. A user may select, for example, the first operation, and accordingly, the electronic device may execute the first operation that stores the location tag data of the second image in the first image.

As another example, the electronic device may execute an operation having the highest propriety from among the plurality of operations. For example, the electronic device may determine, to be the operation to be executed, the first operation of storing the location tag data in the first image or the second operation of storing the person tag data of the second image in the first image. The electronic device may store proprieties of operations for processing an image. For example, the electronic device stores, in advance, the first operation that stores the location tag data in the first image as an operation with a first priority, and stores, in advance, the second operation that stores the person tag data in the first image as an operation with a second propriety. The electronic device compares priorities between the first operation and the second operation, and may execute the first operation having a relatively high priority.

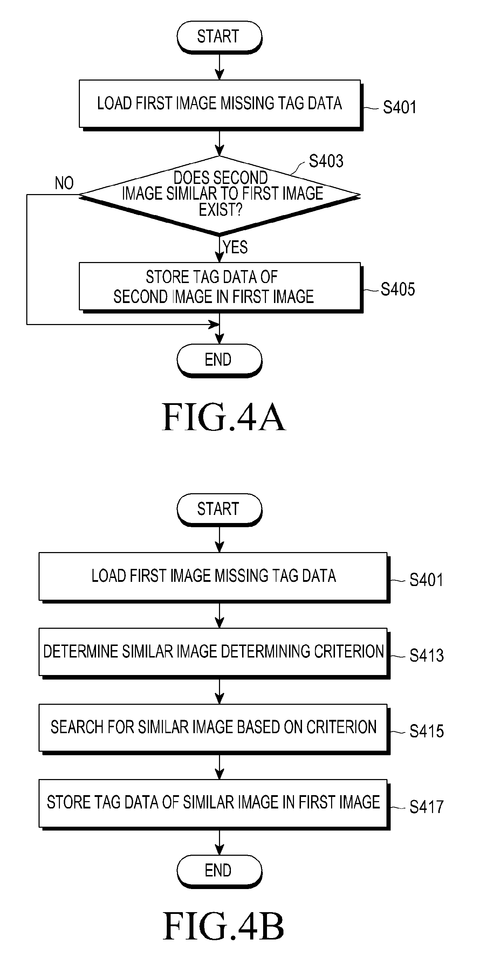

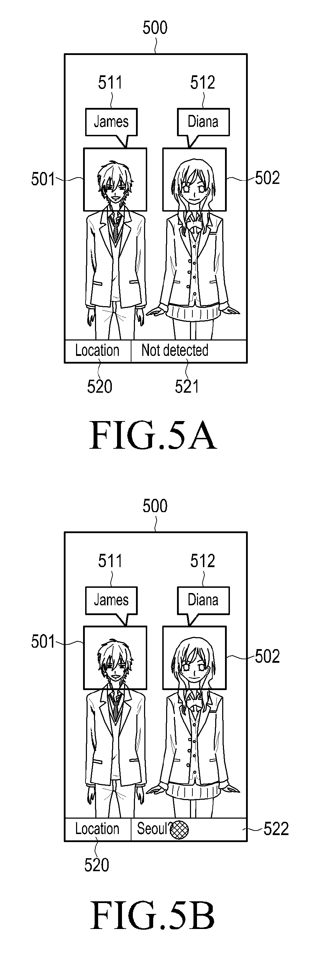

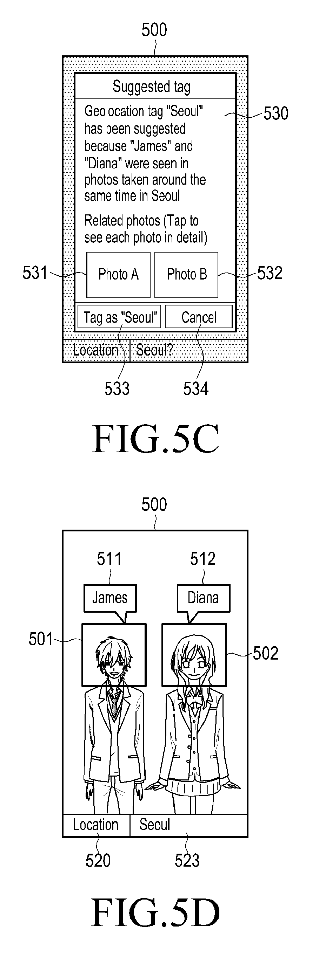

FIG. 4A is a flowchart illustrating a method of controlling an electronic device according to an embodiment of the present invention. The controlling method of FIG. 4A will be described in detail with reference to FIGs. 5A through 5D, and FIGs. 5A through 5D are conceptual diagrams illustrating a screen displayed on an electronic device according to various embodiments of the present invention.

As described in FIG. 4A, the electronic device may load a first image excluding tag data. Here, an image executing tag data may be an image that excludes a first type of tag data. For example, the image excluding tag data is an image that excludes location tag data, and may be an image including another tag data, such as a person tag, a time stamp, or the like.

For example, as illustrated in FIG. 5A, the electronic device may load a first image 500 that excludes location tag data. The first image 500 may include at least one person 501 and 502. Also, the first image 500 may include, as an object attribute, a person recognition result 511 and 512 associated with a person included in an image. Here, the person recognition result 511 and 512 may be obtained based on various conventional person recognition schemes, and the electronic device may store the person recognition result 511 and 512 as an object attribute of the first image 500. Also, the electronic device may display the person recognition result 511 and 512 on the first image 500. For example, the electronic device may display names of persons corresponding to the person recognition result 511 and 512, as illustrated in FIG. 5A.

The image 500 excluding tag data may exclude location tag data. As illustrated in FIG. 5A, the electronic device may display a message 521 indicating that location tag data 520 corresponding to the first image 500 does not exist.

Referring again to FIG. 4A, the electronic device may determine whether a second image similar to the first image exists in step S403. For example, the electronic device may determine whether a second image including at least one from the person recognition result 511 and 512, which is the object attribute of the first image, exists. The electronic device may compare a person recognition result stored in the second image in advance to the object attribute of the first image, and may determine the second image as a similar image of the first image. Also, the electronic device may apply a person recognition scheme to the second image, and may compare a person recognition result obtained as a result of the application, to the object attribute of the first image, so as to determine the second image as a similar image property of the first image. For example, the electronic device may determine, as a similar image property, the second image having a person recognition result identical to at least one of the recognition results of "James" 511 and "Diana" 512, which is an object attribute of the first image 500.

The electronic device may store tag data of the second image in the first image in step S405. For example, the electronic device of FIG. 5A may store "Seoul" which is location tag data of the second image in the first image as location tag data. The electronic device displays a location tag data storage determining tab 522 associated with storing the location tag data of the second image as illustrated in FIG. 5B before storing the location tag data of the second image in the first image, so as to inquire of a user whether to store the location tag data of the second image. When the user designates the location tag data storage determining tab 522, the electronic device may display a window 530 for displaying a reason of recommending the location tag data. Also, the electronic device may display second images 531 and 532 in the window 530 for displaying the reason of recommending the location tag data. Also, the electronic device may display the reason of recommending the location tag data of the second images 531 and 532 in the window 530 for displaying the reason of recommending the location tag data, the reason reading the second images 531 and 532 include object properties identical to the first image 500, that is, each of the second images 531 and 532 has a person recognition result identical to the first image 500. The electronic device may further display a tag data storage button 533 and a cancel button 534. When the tag data storage button 533 is designated, the electronic device may store the location tag data of the second images 531 and 532 in the first image 530, and may display the stored location tag data 523 as illustrated in FIG. 5D.

Although it is described that the electronic device adds tag data of another object to an object excluding tag data, it is merely an example. The electronic device according to another embodiment of the present invention may update an object including tag data based on tag data of another object. For example, when a first image includes "Korea" as location tag data, the electronic device may update the location tag data of the first image from "Korea" to "Seoul".

FIG. 4B is a flowchart illustrating a method of controlling an electronic device according to another embodiment of the present invention.

The electronic device may load a first image excluding tag data in step S401. The electronic device may set a similar image property determining criterion for determining a similar image property in step S413. The electronic device may set a criterion determined in advance for each type of object as the similar image property determining criterion. For example, when an object is an image, the electronic device may determine an object attribute, such as a time stamp, a person recognition result associated with a person in an image, and the like, as the similar image property determining criterion, in advance. Also, the electronic device may set the similar image property determining criterion based on a type of an application that is being executed. For example, when a currently executed application is a gallery application, the electronic device may set an object attribute, such as a time stamp, a person recognition result associated with a person included in an image, and the like, as the similar image property determining criterion.

The electronic device may search for a similar image property based on the set criterion in step S415. The electronic device may search for a similar image property from among at least one image stored in a gallery application and the like. For example, the electronic device may search for a similar image property that includes a time stamp or a person recognition result associated with a person included in an image, which is identical or similar to the first image excluding tag data, from among at least one stored image.

The electronic device may store tag data of the similar image property in the first image in step S417. The electronic device may store the location tag data of the second image in the first image as illustrated in FIGs. 5A through 5D.

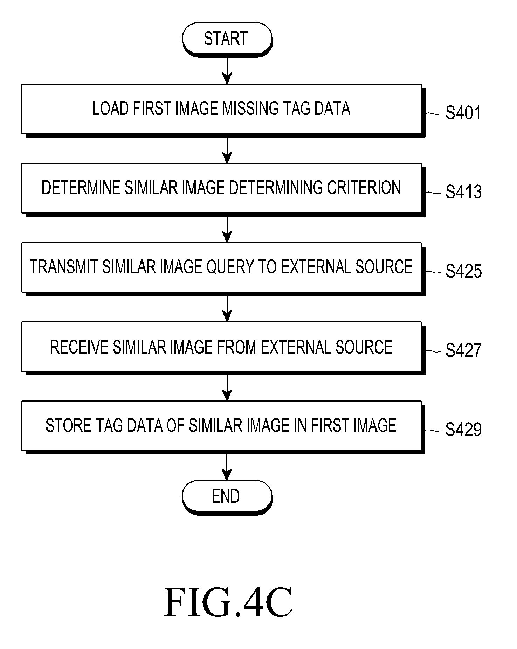

FIG. 4C is a flowchart illustrating a method of controlling an electronic device according to another embodiment of the present invention.

The electronic device may load a first image excluding tag data in step S401. The electronic device sets a similar image property determining criterion in step S413. The electronic device may transmit a query message requesting a similar image property from an external source in step S425. The similar image property query message in which the set similar image property determining criterion may be transmitted. The external source may be an image server that includes a database for storing an image or may be another electronic device that stores at least one image.

The external source may receive the similar image property query message, may search for a similar image, and may transmit the retrieved similar image to the electronic device. The electronic device may receive the similar image property from the external source in step S427, and may store tag data of the similar image property in the first image in step S429. As another example, the electronic device may receive only tag data of the similar image property from the external source, and may store the tag data of the received similar image property in the first image.

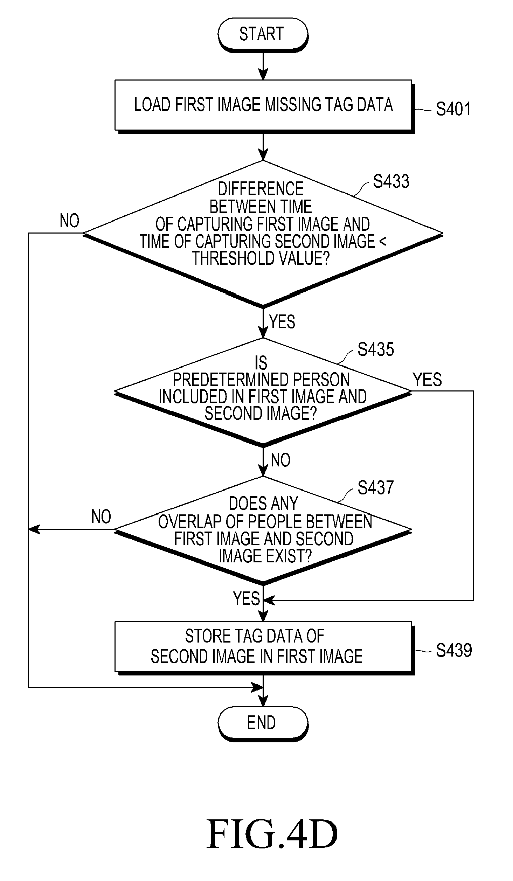

FIG. 4D is a flowchart illustrating a method of controlling an electronic device according to an embodiment of the present invention.

The electronic device may load a first image excluding tag data in step S401. The electronic device may compare a time stamp associated with a point in time of capturing the first image and a time stamp associated with a point in time of capturing a second image, and determines whether a difference between the points in time of capturing the images is less than a threshold value in step S433. When it is determined that the difference between the point in time of capturing the first image and the point in time of capturing the second image is less than the threshold value in step S433-Y, the electronic device compares a person recognition result associated with a person included in the first image and a person recognition result associated with a person included in the second image so as to determine whether a predetermined person of the first image exists in the second image in step S435.

When it is determined that the predetermined person of the first image exists in the second image in step S435-Y, the electronic device may store tag data of the second image in the first image in step S439. When it is determined that the predetermined person of the first image does not exist in the second image in step S435-N, the electronic device determines whether an overlap exists between another person that is different from the predetermined person of the first image and persons in the second image in step S437. When it is determined that the overlap exists between another person that is different from the predetermined person of the first image and the persons in the second image in step S437-Y, the electronic device may store tag data of the second image in the first image in step S439. Here, the electronic device may store, in the first image, tag data such as a person recognition result associated with a person of the second image, an event, and the like.

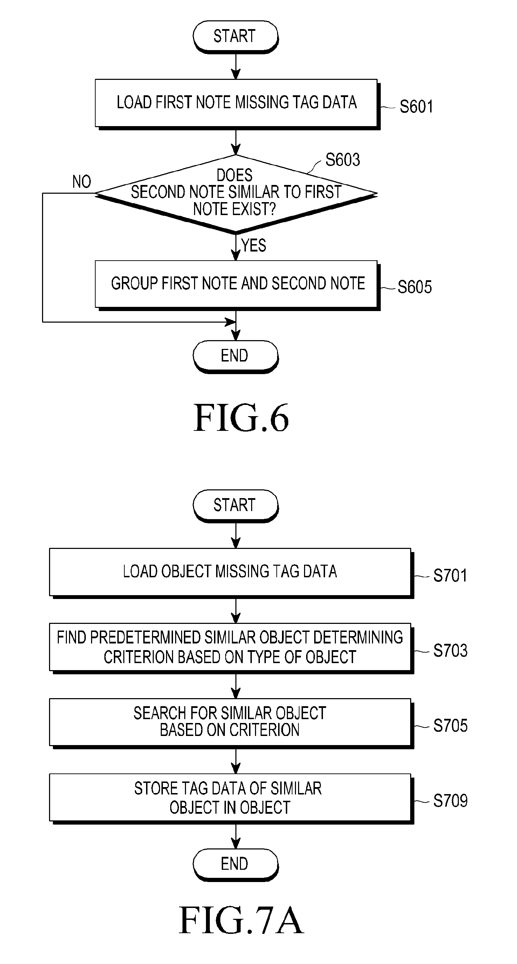

FIG. 6 is a flowchart illustrating a method of controlling an electronic device according to another embodiment of the present invention. In an embodiment of FIG. 6, the electronic device may load a first note excluding tag data in step S601. Here, it is assumed that the first note includes a title, a body text, a content media, a time stamp, and location tag data.

The electronic device may determine whether a second note similar to the first note exists in step S603. The electronic device may determine whether the second note which is a similar note of the first note based on an object attribute of the first note. For example, the electronic device may determine whether the second note which is the similar note exists based on at least one of the title, the body text, the content media, the time stamp, and the location tag data included in the first note. When it is determined that the second note which is the similar note exists by determining a similarity between the second note and at least one object attribute of the first note, that is, the title, the body text, the content media, a substring of the location tag data, the location tag data and the time stamp in step S603-Y, the electronic device may group the first note and the second note. The electronic device may group the first note and the second note in a form of a folder or a stack.

As described in FIG. 4C, the electronic device may transmit a similar note query message including an object attribute to an external source, and a similar note received from the external source may be grouped with the first note. The electronic device may automatically generate and assign a group title of the generated group. For example, the electronic device may generate and assign the group title based on a common object attribute between the first note and the second note of the generated group.

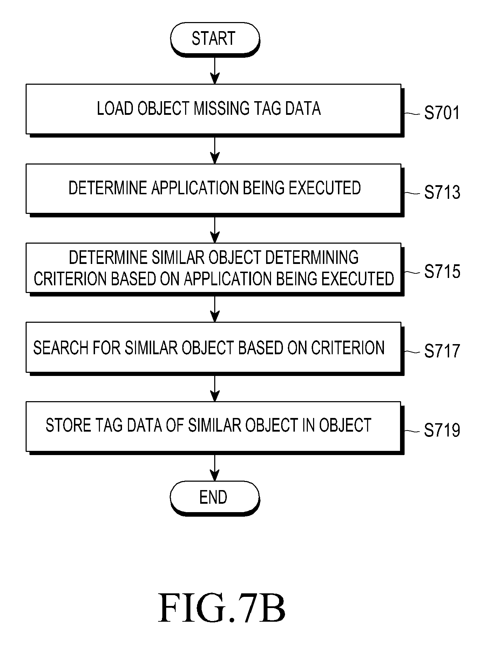

FIGS. 7A and 7B are flowcharts illustrating a method of controlling an electronic device according to various embodiments of the present invention.

As illustrated in FIG. 7A, the electronic device may load an object excluding tag data in step S701. The electronic device may determine a similar object determining criterion as a criterion determined in advance based on a type of an object in step S703. For example, in a case in which an object is an image, the electronic device may determine an object attribute corresponding to the similar object determining criterion, in advance, to be a time stamp or a person recognition result associated with a person included in an image. The electronic device may search for a similar object based on the criterion in step S705, and may store tag data of the similar object in the object in step S709.

According to another embodiment of the present invention, as illustrated in FIG. 7B, the electronic device may load an object excluding tag data in step S701. The electronic device may determine a type of an application that is being executed in step S713, and may determine a similar object determining criterion based on the type of the application in step S715. For example, the electronic device may determine the similar object determining criterion, in advance, to be a time stamp to correspond to a case in which the type of the application being executed is a gallery application, and when it is determined that the gallery application is executed, the electronic device may determine the time stamp as the similar object determining criterion. The electronic device may search for a similar object based on the determining condition in step S717, and may store tag data of the similar object in the corresponding object in step S719.

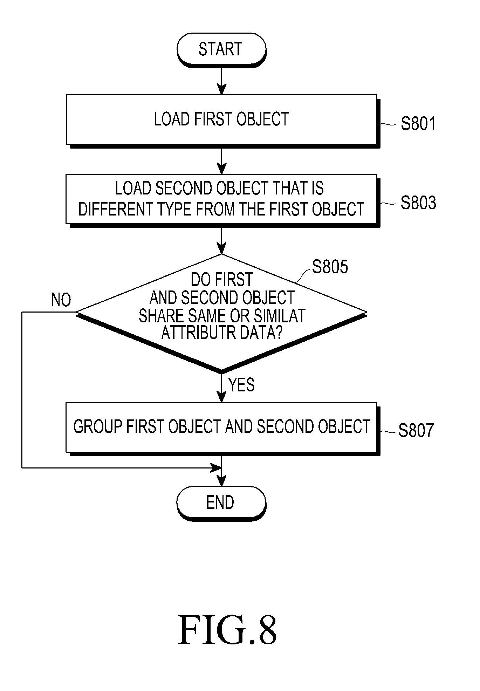

FIG. 8 is a flowchart illustrating a method of controlling an electronic device according to an embodiment of the present invention. As illustrated in FIG. 8, the electronic device may load a first object in step S801, and may load a second object which is a different type from the first object in step S803. For example, the electronic device may load an image as the first object, and may load a moving picture as the second object. It is assumed that the image includes location tag data of "Paris" and a person recognition result of "Amy" and "Sean", as object properties. Also, it is assumed that the moving picture includes location tag data of "Paris" and a person recognition result of "Amy" and "Sean", as object properties.

The electronic device may determine whether a common object attribute exists from among the object properties of the first object and the object properties of the second object in step S805. In the present embodiment, it is determined that the location tag data and the person recognition result from among the object properties of the first object are identical to the location tag data and the person recognition result from among the object properties of the second object.

When it is determined that the common object attribute exists in step S805-Y, the electronic device may group the first object and the second object in step S807. Also, the electronic device may generate a title of the group. The electronic device may generate the title of the group based on the common object attribute of the first and the second object. For example, the electronic device may generate a title of "At Paris, With Amy and Sean" based on the common object properties, that is, the location tag data of "Paris" and the person recognition result of "Amy" and "Sean. The electronic device may generate an event or a file name corresponding to the title.

Also, the electronic device may add an object with a person recognition result to a generated group based on an overlap of the person recognition result among the objects. rFor example, a third image including "Amy" and "Sean", and further including "John", may be added to the generated group of first and second images including "Amy" and "Sean". The electronic device may further store an image in a group generated based on an overlap of the person recognition result. Also, the electronic device may estimate which person captured the images in a generated image group. For example, when a number of images including "John" is relatively small, the electronic device may estimate that "John" is the person who captured the images in the group, and may correct the title of the group to "At Paris, With Amy and Sean, By John" and the like.

The user may select only a portion of tag data as opposed to an entirety of tag data provided by the electronic device. For example, as described above, the electronic device may store the generated group including the person recognition results of "Amy", "Sean", and "John", and the user may provide a user input for excluding the additional tag data of "John". The user may also select to store the generated group including the person recognition result of "Amy", "Sean", and "John".

Also, the electronic device may provide only a portion of tag data, as opposed to an entirety of tag data, based on a priority. The electronic device may determine, based on a recognition process, that an image includes a subject which the user has designated as high priority. Also, at least one predetermined frame from among a plurality of frames included in a moving picture may be designated as high priority. When a plurality of pieces of tag data is stored, the electronic device may only store tag data with a relatively high priority and exclude the remaining tag data.

It may be appreciated that the embodiments of the present invention can be implemented in software, hardware, or a combination thereof. Any such software may be stored, for example, in a volatile or non-volatile storage device such as a ROM, a memory such as a RAM, a memory chip, a memory device, a memory IC, or a recordable optical or magnetic medium such as a CD, a DVD, a magnetic disk, or a magnetic tape, regardless of its ability to be erased or its ability to be re-recorded. Also, it will be appreciated that embodiments of the present invention may be implemented by a computer or a portable terminal which includes a control module and a memory, in which the memory may be, for example, a storage medium that is readable by a machine and is suitable for storing one or more programs that include instructions for implementing embodiments of the present invention.

Accordingly, embodiments of the present invention include a program of code implementing any method described in the specification and appended claims and a machine-readable storage medium, such as, e.g., a computer-readable storage medium, for storing the program. Moreover, such a program as described above can be electronically transferred through a medium, such as a communication signal transferred through wired or wireless connection, and the present invention properly includes such programs and their equivalents. Further, an electronic device according to an embodiment of the present invention can receive the program from a program providing apparatus connected to the device wirelessly or through a wire and store the received program.

The program providing apparatus may include a program that includes instructions to execute the embodiments of the present invention, a memory that stores information or the like required for the embodiments of the present invention, a communication module that conducts wired or wireless communication, and a control module that transmits a corresponding program either in response to a request from the electronic device or automatically.

While the invention has been shown and described with reference to certain embodiments thereof, it will be understood by those skilled in the art that various changes in form and detail may be made therein without departing from the spirit and scope of the invention as defined by the appended claims.

## Claims

1. A method for an electronic device, comprising:
determining whether at least one common object attribute exists among a plurality of objects;
determining whether data for the at least one common object attribute is identical or similar among the plurality of objects if the at least one common object exists; and
executing an operation corresponding to the at least one common object attribute if the data for the at least one common object attribute is identical or similar among the plurality of objects.

2. The method of claim 1, wherein the plurality of objects comprise at least one of images, texts, media, and notes.

3. The method of claim 1, wherein the at least one common object attribute comprise at least one of an image property, a person tag, a time stamp, a checked place, a title of a note, a body text of a note, an attached media, and a location tag.

4. The method of claim 1, wherein the operation comprises at least one of providing tag data, grouping, providing, providing a title, producing an episode, and providing a file name.

5. The method of claim 1, wherein executing the operation corresponding to the at least one common object attribute comprises:
extracting a plurality of operations corresponding to the at least one common object attribute;
providing the plurality of extracted operations;
selecting an operation to be executed from among the plurality of provided extracted operations; and
executing the selected operation.

6. The method of claim 1, wherein the operation corresponding to the at least one common object attribute is predetermined in association with the object attribute.

7. The method of claim 1, wherein determining whether the data for the at least one common object attribute is identical or similar among the plurality of objects comprises:
determining whether a difference between data for the at least one common object attribute among the plurality of objects is less than a predetermined threshold value.

8. The method of claim 1, wherein the method further comprises:
transmitting to an external source a query message including the at least one common object attribute.

9. The method of claim 8, further comprising:
receiving the at least one external object including the at least one common object attribute from the external source.

10. The method of claim 1, further comprising:
setting a criterion for determining the at least one common object attribute.

11. An electronic device, comprising:
a controller configured to determine whether at least one common object attribute exists among a plurality of objects, to determine whether data for the at least one common object attribute is identical or similar among the plurality of objects if the at least one common object exists, and to execute an operation corresponding to the at least one common object attribute if data for the at least one common object attribute is identical or similar among the plurality of object; and
a storage module configured to store the plurality of objects.

12. The electronic device of claim 11, wherein the at least one common object attribute comprise at least one of an image property, a person tag, a time stamp, a checked place, a title of a note, a body text of a note, an attached media, and a location tag.

13. The electronic device of claim 12, wherein the operation comprises at least one of providing tag data, grouping, providing a title, producing an episode, and providing a file name.

14. The electronic device of claim 11, wherein the controller executes the operation corresponding to the at least one common object attribute, and the controller is further configured to perform:
extracting a plurality of operations corresponding to the at least one common object attribute;
providing the plurality of extracted operations;
selecting an operation to be executed from among the plurality of provided extracted operations; and
executing the selected operation.

15. The electronic device of claim 11, wherein the electronic device further comprises:
a communication module configured to transmit to an external source a query message including the at least one common object attribute.
